# FASCICULE DE BREVET EUROPEEN

(11) **EP 3 129 432 B1**
(45) Date de publication et mention de la délivrance du brevet: **25.11.2020**
(21) Numéro de dépôt: 14722264.0
(22) Date de dépôt: 11.04.2014
(51) Int. Cl.: C08J 9/28, B01J 13/00, C08G 8/20, C08J 9/00

(54) **PROCEDE DE PREPARATION D'UNE COMPOSITION D'AEROGEL MONOLITHIQUE ORGANIQUE SUPER ISOLANT THERMIQUE, CETTE COMPOSITION ET SON UTILISATION.**
VERFAHREN ZUR HERSTELLUNG EINER MONOLITHISCHEN, EXTREM WÄRMEDÄMMENDEN ORGANISCHEN AEROGELZUSAMMENSETZUNG, DIESE ZUSAMMENSETZUNG UND IHRE VERWENDUNG
MONOLITHIC, SUPER HEAT-INSULATING, ORGANIC AEROGEL COMPOSITION PREPARATION METHOD, SAID COMPOSITION, AND THE USE THEREOF

(43) Date de publication de la demande: 15.02.2017
(73) Titulaire: Hutchinson SA, 75908 Paris (FR)
(72) Inventeur: HUILLET, Cédric, F-45800 Montargis (FR); FANNECHERE, Florian, F-45120 Chalette sur Loing (FR); SWOBODA, Benjamin, F-77590 Bois le Roi (FR); DUFOUR, Bruno, F-77430 Champagne sur Seine (FR); POUPA, Nadine, F-45680 Dordive (FR)
(74) Mandataire: Plasseraud IP
(86) Numéro de dépôt international: PCT/FR2014/050892
(87) Numéro de publication internationale: WO 2015/155423

(56) Documents cités:
- WO-A1-94/22943
- BRUNO M M ET AL: "A novel way to maintain resorcinol-formaldehyde porosity during drying: Stabilization of the sol-gel nanostructure using a cationic polyelectrolyte", COLLOIDS AND SURFACES. A, PHYSICACHEMICAL AND ENGINEERING ASPECTS, ELSEVIER, AMSTERDAM, NL, vol. 362, no. 1-3, 5 juin 2010 (2010-06-05), pages 28-32, XP027046589, ISSN: 0927-7757 [extrait le 2010-05-12]
- CHAIJITRSAKOOL T ET AL: "Effects of pore characters of mesoporous resorcinol-formaldehyde carbon gels on enzyme immobilization", JOURNAL OF MOLECULAR CATALYSIS. B, ENZYMATIC, ELSEVIER, AMSTERDAM, NL, vol. 55, no. 3-4, 1 novembre 2008 (2008-11-01), pages 137-141, XP025433300, ISSN: 1381-1177, DOI: 10.1016/J.MOLCATB.2008.02.008 [extrait le 2008-03-07]

## Description

La présente invention concerne un procédé de préparation d'une composition gélifiée, séchée et non pyrolysée formant un aérogel monolithique organique super isolant thermique, une telle composition d'aérogel et une utilisation de cette composition. L'invention s'applique à des aérogels organiques non pyrolysés de très faible densité et de surface spécifique et de volume poreux élevés, pour leur utilisation comme matériaux super isolants thermiques (i.e. présentant typiquement une conductivité thermique inférieure ou égale à 40 mW.m⁻¹.K⁻¹ environ).

Les aérogels sont des matériaux poreux obtenus après gélification puis séchage d'un gel, dans lequel le liquide servant de solvant a été remplacé par un gaz ou un mélange gazeux. Les aérogels organiques sont très prometteurs pour une utilisation comme isolants thermiques, du fait qu'ils présentent des conductivités thermiques pouvant être de seulement 0,012 W.m⁻¹K⁻¹, i.e. proches de celles obtenues avec les aérogels de silice (0,010 W.m⁻¹K⁻¹). En effet, ils sont fortement poreux (étant à la fois microporeux et mésoporeux) et présentent une surface spécifique et un volume poreux élevés. Les aérogels de silice sont typiquement sous forme de poudre, et présentent comme inconvénient majeur de libérer des nanoparticules de silice, ce qui pose un problème de toxicité. Par contre, les aérogels organiques peuvent être obtenus sous forme de monolithes, ce qui les rend plus facilement manipulables pour être utilisés dans des bâtiments.

Les aérogels organiques de haute surface spécifique sont typiquement préparés à partir d'une résine résorcinol-formaldéhyde (RF en abrégé). Ces résines sont particulièrement intéressantes pour obtenir ces aérogels, car elles sont peu coûteuses, peuvent être mises en oeuvre dans de l'eau et permettent d'obtenir différentes porosités et densités en fonction des conditions de préparation (ratios entre réactifs, choix du catalyseur, etc.). De plus, ces aérogels peuvent être pyrolysés sous forme de carbone poreux de haute surface spécifique qui présentent l'avantage d'absorber les rayonnements infrarouges et donc de posséder une faible conductivité thermique à haute température.

Par contre, le gel formé par une telle résine RF est usuellement un gel chimique irréversible, obtenu par polycondensation des précurseurs et qui ne peut plus être mis en œuvre. De plus, à forte conversion, ce gel devient hydrophobe et précipite, ce qui induit des contraintes mécaniques dans le matériau et donc une plus grande fragilité. Ainsi, pour une faible densité de matériau, il est nécessaire d'utiliser une méthode de séchage de l'eau suffisamment douce pour éviter une fracturation ou une contraction de la structure du gel, et une perte de surface spécifique. Il s'agit typiquement d'un échange de solvant par un alcool puis d'un séchage par un fluide supercritique tel que du CO₂, tel que décrit dans le document US-A-4 997 804, ou d'une lyophilisation, techniques qui présentent l'inconvénient d'être complexes et coûteuses.

De plus, les gels RF présentent l'inconvénient d'être hydrophiles en surface et d'adsorber l'eau après exposition à l'air ambiant, notamment relativement humide. L'eau étant un bon conducteur thermique, les propriétés d'isolation des gels RF se dégradent donc avec le temps.

Un autre inconvénient des gels RF est qu'ils sont peu absorbants pour les rayons infrarouges. Or, à haute température, la conduction thermique par rayonnement infrarouge est importante, ce qui pénalise l'isolation thermique procurée par ces gels. Afin d'améliorer la résistance thermique à haute température des gels RF, on a cherché par le passé à y incorporer un additif absorbant capable d'empêcher la conduction par rayonnement infrarouge, tel que du noir de carbone. Cependant, dans le cas d'un aérogel monolithique RF, il est difficile d'incorporer de manière homogène un tel absorbant infrarouge à l'aérogel du fait que celui-ci n'est pas sous forme de poudre.

L'article « A novel way to maintain resorcinol-formaldehyde porosity during drying: Stabilization of the sol-gel nanostructure using a cationic polyelectrolyte, M. M. Bruno et al., 2010 » divulgue une composition d'aérogel monolithique pyrolysée à 800° C, issue d'un gel de RF comprenant, en plus d'un catalyseur basique C à base de carbonate de sodium, un polyélectrolyte cationique P constitué de poly(chlorure de diallyldiméthyl ammonium) qui permet de conserver la porosité du gel suite à son séchage à l'air. Le gel est préparé avec les ratios molaires R : F : C : P = 1 : 2,5 : 9.10-3 : 1,6.10-2 et les concentrations correspondantes [4M] : [10M] : [0,036M] : [0,064], en polymérisant d'emblée R et F en présence de C et P à 70° C pendant 24 heures.

L'article « Effects of pore characters of mesoporous resorcinol-formaldehyde carbon gels on enzyme immobilization, Chaijitrsakool T. et al. » enseigne de préparer un carbone mésoporeux par polymérisation de précurseurs R et F sans polyélectrolyte, séchage par échange de solvant et microondes puis pyrolyse jusqu'à une température de 750° C. Ce carbone poreux est utilisé pour immobiliser une enzyme.

Le document WO 94/22943 A1 enseigne de préparer un aérogel RF par polymérisation de R et F sans polyélectrolyte et sans solvant aqueux pour dissoudre R et F, uniquement avec les traces d'eau contenues dans R et F, puis par séchage via échange de solvant puis évaporation à l'air. Les aérogels obtenus sont soit non traités thermiquement avec une densité obtenue de 0,6 pour ces aérogels, soit pyrolysés à 1050° C.

Un but de la présente invention est de proposer un procédé de préparation d'une composition organique gélifiée, séchée et non pyrolysée qui permette de remédier à l'ensemble des inconvénients précités en formant un aérogel monolithique organique de faible densité et de haute surface spécifique qui présente une propriété de super isolation thermique stable dans le temps, tout en étant obtenu par un procédé simple et donc peu coûteux.

Ce but est atteint en ce que la Demanderesse vient de découvrir d'une manière surprenante que l'ajout en phase aqueuse, à des précurseurs d'une résine de type polyhydroxybenzène(s) et formaldéhyde(s), d'une famille d'additifs particulière constituée d'un polyélectrolyte cationique hydrosoluble pour obtenir une solution de la résine, suivie d'une gélification de cette solution, d'un séchage en étuve du gel obtenu puis d'un traitement thermique sous gaz inerte sans pyrolyse du gel séché, permet d'obtenir un aérogel en partie carbonisé qui présente à la fois une très faible conductivité thermique même à haute température et une faible reprise en eau lui conférant une conductivité thermique durablement faible, en pouvant se passer d'un séchage par échange de solvant et par fluide supercritique.

Plus précisément, un procédé de préparation selon l'invention d'une composition gélifiée, séchée, formant un aérogel monolithique organique de conductivité thermique inférieure ou égale à 40 mW.m⁻¹.K⁻¹ et issue au moins en partie d'une résine obtenue par polycondensation de polyhydroxybenzène(s) R et de formaldéhyde(s) F, est tel que défini à la revendication 1 annexée et comprend :
a) une polymérisation dans un solvant aqueux W desdits polyhydroxybenzène(s) R et formaldéhyde(s) F en présence d'un catalyseur acide ou basique, pour l'obtention d'une solution à base de ladite résine,
b) une gélification de cette solution pour l'obtention d'un gel de ladite résine, et
c) un séchage du gel obtenu en b) pour obtenir un gel séché.

Ce procédé de l'invention est tel que l'on met en œuvre l'étape a) en présence d'au moins un polyélectrolyte cationique hydrosoluble P dissous dans ledit solvant W et présent dans ladite composition selon une fraction massique comprise entre 0,2 % et 2 %, et il comprend en outre une étape d) de traitement thermique sous gaz inerte du gel séché obtenu à l'étape c) à des températures comprises entre 150° C et 500° C pour l'obtention de l'aérogel non pyrolysé dont la conductivité thermique est sensiblement inchangée, même après exposition prolongée à une atmosphère humide comme expliqué ci-après pour la composition obtenue.

Par « gel », on entend de manière connue le mélange d'une matière colloïdale et d'un liquide, qui se forme spontanément ou sous l'action d'un catalyseur par la floculation et la coagulation d'une solution colloïdale.

Par « polymère hydrosoluble », on entend un polymère qui peut être solubilisé dans l'eau sans adjonction d'additifs (de tensioactifs notamment), à la différence d'un polymère hydrodispersable qui est susceptible de former une dispersion lorsqu'il est mélangé à de l'eau.

On notera que ce traitement thermique post-séchage selon l'invention n'est pas à confondre avec une pyrolyse de l'aérogel (qui est par définition une carbonisation totale de l'aérogel usuellement mise en œuvre à une température supérieure à 600° C, typiquement d'au moins 800° C), du fait des températures de chauffage utilisées dans ce traitement de l'invention qui sont au plus de 500° C.

Avantageusement, ce traitement thermique permet d'améliorer de manière inattendue la stabilité des propriétés d'isolation thermique de l'aérogel, avec sa conductivité thermique qui n'augmente quasiment pas même sous une atmosphère caractérisée par un fort degré d'humidité relative par exemple de plus de 60 %.

On notera en outre qu'une composition selon l'invention incorporant ce polyélectrolyte cationique P peut être avantageusement obtenue en utilisant à l'étape c) un séchage en étuve bien plus simple à mettre en œuvre et pénalisant moins le coût de production de l'aérogel que l'échange de solvant et le séchage par fluide supercritique. En effet, la Demanderesse a découvert que ce polyélectrolyte P permet de conserver la forte porosité du gel obtenu suite à ce séchage en étuve et de lui conférer une très faible densité alliée à une surface spécifique et un volume poreux élevés.

Selon une autre caractéristique de l'invention, ledit gel séché obtenu à l'étape c) présente un cœur et une couche superficielle qui peuvent comprendre tous deux des groupes oxygénés dont une partie seulement est carbonisée à l'étape d) de traitement thermique, l'aérogel obtenu suite à cette étape d) présentant des dits groupes oxygénés intacts dans ledit cœur et ladite couche superficielle.

On notera que cette carbonisation seulement partielle des groupes oxygénés de l'aérogel, qui se manifeste par une absence de carbonisation d'une partie significative de ces groupes oxygénés notamment au cœur de l'aérogel, témoigne de cette différence avec les traitements usuels de pyrolyse qui ne sont pas mis en œuvre dans la présente invention.

Avantageusement, ledit aérogel obtenu suite à l'étape d) peut présenter à titre de dits groupes oxygénés intacts des groupes hydroxyles et/ou des groupes formaldéhydes.

Selon un mode préférentiel de réalisation de l'invention, l'étape d) comprend au moins une montée en température suivie d'au moins un palier de stabilisation thermique, et se termine par un refroidissement progressif jusqu'à une température comprise entre 15 et 30° C.

De préférence, l'étape d) comprend successivement :
- une première dite montée en température à une vitesse comprise entre 1 et 5° C /minute jusqu'à une température intermédiaire comprise entre 100 et 200° C, suivie d'un premier dit palier de stabilisation à ladite température intermédiaire d'une durée comprise entre 5 et 30 minutes,
- une seconde dite montée en température à une vitesse comprise entre 2 et 10° C /minute jusqu'à une température finale comprise entre 240 et 460° C suivie d'un second dit palier de stabilisation à ladite température finale d'une durée comprise entre 1 heure et 3 heures, puis
- ledit refroidissement progressif pendant une durée d'au moins 45 minutes jusqu'à une température comprise entre 20 et 25° C.

Comme indiqué ci-dessus, on utilise à l'étape a) ledit au moins un polyélectrolyte cationique P selon une fraction massique dans ladite composition comprise entre 0,2 % et 2 %.

Ledit au moins un polyélectrolyte cationique P peut être tout polyélectrolyte cationique totalement soluble dans l'eau et de force ionique faible.

A titre encore plus préférentiel, on utilise à l'étape a) pour ledit au moins un polyélectrolyte cationique P un polymère organique choisi dans le groupe constitué par les sels polymériques d'ammonium quaternaire, le poly(chlorure de vinylpyridinium), la poly(éthylène imine), la poly(vinyl pyridine), le poly(chlorhydrate d'allylamine), le poly(chlorure de triméthylammonium éthylméthacrylate), le poly(acrylamide-co-chlorure de diméthylammonium) et leurs mélanges, et de préférence un sel comportant des unités issues d'un ammonium quaternaire choisi parmi les poly(halogénure de diallyldiméthylammonium).

A titre encore plus préférentiel, il s'agit du poly(chlorure de diallyldiméthylammonium) ou du poly(bromure de diallyldiméthylammonium).

Avantageusement, l'on peut mettre en œuvre l'étape a) à une température comprise entre 15 et 30° C, en dissolvant le(s) polyhydroxybenzène(s) R et ledit au moins un polyélectrolyte P dans ledit solvant aqueux W de préférence constitué d'eau, puis en ajoutant à la dissolution obtenue le(s)dit(s) formaldéhyde(s) F et ledit catalyseur acide ou basique.

Parmi les polymères précurseurs de ladite résine qui sont utilisables dans la présente invention, on peut citer les polymères résultant de la polycondensation d'au moins un monomère du type polyhydroxybenzène R et d'au moins un monomère formaldéhyde F. Cette réaction de polymérisation peut impliquer plus de deux monomères distincts, les monomères additionnels étant du type polyhydroxybenzène ou non. Les polyhydroxybenzènes R utilisables sont préférentiellement des di- ou des tri- hydroxybenzènes, et avantageusement le résorcinol (1,3-di hydroxybenzène) ou le mélange du résorcinol avec un autre composé choisi parmi le catéchol, l'hydroquinone, le phloroglucinol.

A titre de catalyseur utilisable à l'étape a), on peut par exemple citer des catalyseurs acides tels que des solutions aqueuses d'acide chlorhydrique, sulfurique, nitrique, acétique, phosphorique, trifluoroacétique, trifluorométhanesulfonique, perchlorique, oxalique, toluènesulfonique, dichloroacétique, formique, ou bien des catalyseurs basiques tels que le carbonate de sodium, l'hydrogénocarbonate de sodium, le carbonate de potassium, le carbonate d'ammonium, le carbonate de lithium, l'ammoniaque, l'hydroxyde de potassium et l'hydroxyde de sodium.

Avantageusement, l'on peut utiliser à l'étape a) les polyhydroxybenzène(s) R et formaldéhyde(s) F suivant un rapport molaire R/F compris entre 0,3 et 0,7.

Egalement avantageusement, l'on peut utiliser à l'étape a) un rapport massique R/W entre polyhydroxybenzène(s) R et solvant aqueux W compris entre 0,001 et 0,07.

Selon une autre caractéristique de l'invention, l'on peut ajouter à ladite solution obtenue en a), avant l'étape b), au moins une charge apte à absorber des rayonnements infrarouges, telle qu'un noir de carbone.

Une composition gélifiée, séchée et non pyrolysée selon l'invention, définie à la revendication 10 annexée, forme un aérogel monolithique organique de conductivité thermique inférieure ou égale à 40 mW.m⁻¹.K⁻¹, et elle est susceptible d'être obtenue par ledit procédé de l'invention.

Cette composition est à base d'une résine issue au moins en partie de polyhydroxybenzène(s) R et de formaldéhyde(s) F, et elle comprend avantageusement le produit d'une réaction de polymérisation dans un solvant aqueux W desdits polyhydroxybenzène(s) R et formaldéhyde(s) F, en présence dudit au moins un polyélectrolyte cationique P dissous dans ce solvant et d'un catalyseur acide ou basique.

Selon l'invention, cette composition comprend au moins un polyélectrolyte cationique hydrosoluble P, et elle a ladite conductivité thermique qui augmente de moins de 10 % et de moins de 20 % respectivement après une heure et deux heures d'exposition à une atmosphère humide régulée à 20° C et 65 % d'humidité relative, ladite conductivité thermique étant mesurée avec un conductivimètre de Neotim par la technique du fil chaud selon la norme ASTM D5930-97 et de préférence en outre selon la recommandation RILEM AAC 11-3.

Avantageusement, ladite conductivité thermique peut être inférieure ou égale à 30 mW.m⁻¹.K⁻¹ et encore plus avantageusement inférieure ou égale à 26 mW.m⁻¹.K⁻¹ après ces deux heures d'exposition à ladite atmosphère humide.

Egalement avantageusement, la composition peut présenter un taux massique de reprise en eau inférieur à 3 % et à 5 %, respectivement après une et deux heures d'exposition à ladite atmosphère humide.

Selon une autre caractéristique de l'invention, ledit aérogel présente un cœur et une couche superficielle qui peuvent comprendre tous deux des groupes oxygénés. Plus précisément, cet aérogel peut présenter une structure polymérique essentiellement à base d'une unité de répétition pouvant comprendre un noyau aromatique auquel sont liés au moins un groupe alkyle et plusieurs dits groupes oxygénés comprenant au moins un groupe hydroxyle et/ou au moins un groupe formaldéhyde.

Avantageusement, ladite composition selon l'invention peut comprendre au moins une charge apte à absorber des rayonnements infrarouges, telle qu'un noir de carbone.

Selon une autre caractéristique de l'invention, ledit aérogel peut émettre une concentration totale de composés organiques volatils (COV), mesurée en chambre d'essai d'émission selon la norme NF ISO 16006-6 de 2005 avec des éprouvettes préparées selon la norme NF EN ISO 16000-11 et conditionnées selon la norme NF EN ISO 16000-9, qui :
- après 3 jours d'exposition dans ladite chambre d'essai, est inférieure à 100 µg.m⁻³ et avantageusement inférieure à 40 µg.m⁻³, et/ou qui
- après 28 jours d'exposition dans ladite chambre d'essai, est inférieure à 40 µg.m⁻³ et avantageusement inférieure à 10 µg.m⁻³.

Selon une autre caractéristique de l'invention, ledit aérogel peut émettre une concentration de formaldéhyde, mesurée en chambre d'essai d'émission selon la norme NF ISO 16006-3 de 2002 avec des éprouvettes préparées selon la norme NF EN ISO 16000-11 et conditionnées selon la norme NF EN ISO 16000-9, qui :
- après 3 jours d'exposition dans ladite chambre d'essai, est inférieure à 20 µg.m⁻³ et avantageusement inférieure à 5 µg.m⁻³, et/ou qui
- après 28 jours d'exposition dans ladite chambre d'essai, est inférieure à 20 µg.m⁻³ et avantageusement inférieure à 5 µg.m⁻³.

Avantageusement, ladite composition selon l'invention peut présenter une surface spécifique comprise entre 400 m²/g et 1200 m²/g et une densité comprise entre 0,04 et 0,2.

Selon un autre aspect de l'invention, ladite composition gélifiée, séchée et non pyrolysée telle que définie ci-dessus est utilisée à titre non limitatif pour l'isolation thermique de bâtiments, d'appareillages pour industries notamment mécaniques ou chimiques, et de véhicules terrestres, ferroviaires, maritimes, fluviaux, aériens ou spatiaux.

On notera que l'émission minimisée, grâce à ladite composition d'aérogel selon l'invention, de composés organiques volatiles (COV) et notamment de composés fortement toxiques tels que les formaldéhydes, permet de résoudre le problème technique essentiel dans le bâtiment des émissions indésirables de ces COV et en particulier des formaldéhydes.

D'autres caractéristiques, avantages et détails de la présente invention ressortiront à la lecture de la description suivante de plusieurs exemples de réalisation de l'invention, donnés à titre illustratif et non limitatif.

Les exemples qui suivent illustrent la préparation de trois aérogels monolithiques organiques AG1, AG2 et AG3 selon l'invention respectivement obtenus par différents traitements thermiques de carbonisation partielle conformes à l'invention faisant suite à leur séchage, en comparaison d'un aérogel « témoin » AG0 dépourvu de ce traitement thermique post-séchage.

On a préparé chaque aérogel AGO, AG1, AG2, AG3 en utilisant les réactifs de départ suivants pour l'obtention d'une même solution à base d'une résine RF :
- le résorcinol (R) de chez Acros Organics, pur à 98 %,
- le formaldéhyde (F) de chez Acros Organics, pur à 37 %,
- un catalyseur (C) constitué d'acide chlorhydrique, et
- du poly(chlorure de diallyldiméthylammonium) (P), pur à 35 % (en solution dans l'eau W).

On a fait figurer au tableau 1 ci-après les ratios, fraction massique et pH utilisés pour l'obtention de la solution initiale de résine RF à l'origine de chaque aérogel AG0, AG1, AG2, AG3:
- R/F est le rapport molaire entre résorcinol et formaldéhyde,
- R/W est le rapport massique entre résorcinol et eau, et
- P désigne la fraction massique de polyélectrolyte.

**Tableau 1 :**

| Quantités de réactifs/procédé | **AG0** | **AG1** | **AG2** | **AG3** |
|---|---|---|---|---|
| R/F | 0,5 | 0,5 | 0,5 | 0,5 |
| R/W | 0,03 | 0,03 | 0,03 | 0,03 |
| P | 0,4 % | 0,4 % | 0,4 % | 0,4 % |
| pH | 1,5 | 1,5 | 1,5 | 1,5 |
| Méthode de séchage | étuve | étuve | étuve | étuve |

On a préparé les aérogels AG0, AG1, AG2, AG3 comme suit.

Pour mettre en œuvre ladite étape a) d'obtention de chaque solution à base de la résine RF, on a dans un premier temps dissous dans un récipient contenant de l'eau W le résorcinol R et le polyélectrolyte P. Puis après totale dissolution, on a ajouté le formaldéhyde F. On a ajusté au pH approprié (1,5) la solution polymérique obtenue avec le catalyseur C, étant précisé que l'on a réalisé l'ensemble de ces opérations à température ambiante (à environ 22° C) et qu'il est possible d'ajouter à la dissolution obtenue du noir de carbone à titre de charge absorbante des rayonnements infrarouges.

Pour mettre en œuvre ladite étape b) de gélification, on a dans un second temps transvasé la solution obtenue dans des moules en Téflon®, que l'on a ensuite placés dans un four à 90° C pendant 24 h pour obtenir chaque gel G0, G1, G2, G3.

Pour mettre en œuvre ladite étape c), on a réticulé chaque gel obtenu en b) en enceinte à 85° C pendant 24 heures, puis on a procédé au séchage de chaque gel réticulé à 105° C en étuve pendant 24 heures pour obtenir l'aérogel «témoin» AG0 et les gels G1, G2, G3 séchés à traiter thermiquement.

Pour mettre en œuvre l'étape d) selon l'invention appliquée aux seuls trois gels G1, G2, G3 ainsi séchés, on a respectivement soumis ces derniers à trois traitements thermiques réalisés sous flux d'azote (avec un même débit d'azote de 0,5 L/min.) mais à trois différentes températures finales de chauffage conduisant à trois degrés de carbonisation partielle des aérogels AG1, AG2 et AG3 obtenus.

Plus précisément, on a mis en œuvre l'étape d) conduisant aux aérogels AG1, AG2 et AG3 suivant le programme de chauffage suivant:
- une première montée en température à 2° C/min. jusqu'à une température intermédiaire de 150° C, suivie d'un premier palier de stabilisation de 15 min. à cette température intermédiaire,
- une seconde montée en température à 5° C /min. jusqu'à une température finale variable (de 250° C pour AG1, 350° C pour AG2 et 450° C pour AG3), suivie d'un second palier de stabilisation de 2 heures à cette température finale, puis
- un refroidissement progressif pendant une heure environ jusqu'à une température de 22° C.

En vue de mesurer la conductivité thermique et le taux massique de reprise en eau des échantillons d'aérogels AG0, AG1, AG2, AG3, on a séché ces échantillons pendant une nuit sous vide à 105° C.

On a mesuré la conductivité thermique de ces échantillons AG0, AG1, AG2, AG3 à 22° C avec un conductivimètre de Neotim par la technique du fil chaud selon la norme ASTM D5930-97 et la recommandation RILEM AAC 11-3. La salle utilisée était une salle à atmosphère régulée en température (20° C) et en humidité (65 % d'humidité relative). Comme visible au tableau 2 ci-après, on a mesuré respectivement à l'instant initial t₀ (avant exposition à cette atmosphère humide), après une heure (instant t₁ₕ) et après deux heures (instant t₂ₕ) d'exposition à cette atmosphère humide:
- le taux massique de reprise en eau des aérogels AG0, AG1, AG2, AG3 (taux massique obtenu classiquement par la différence de masses de chaque aérogel après et avant adsorption d'eau, divisée par la masse initiale de l'aérogel), et
- la conductivité thermique de ces aérogels.

En vue de quantifier les émissions de composés organiques volatiles (COV) des échantillons d'aérogels AG0, AG1, AG2, AG3, on a mesuré ces émissions en chambre d'essai d'émission à deux instants t₃ⱼ et t₂₈ⱼ respectivement après une exposition de 3 jours et de 28 jours dans cette chambre, avec des éprouvettes formées de ces aérogels, préparées selon la norme NF EN ISO 16000-11 et conditionnées selon la norme NF EN ISO 16000-9.

On a réalisé ces analyses en suivant la norme NF ISO 16006-6 (2005) pour la mesure de la quantité totale de COV émis, et la norme NF ISO 16006-3 (2002) pour la mesure de la quantité de formaldéhyde émis.

Le tableau 2 ci-après compare les émissions de COV et de formaldéhyde obtenues à ces deux instants t₃ⱼ et t₂₈ⱼ, en plus de mesures de densité, de conductivité thermique et de reprise en eau des échantillons d'aérogels AG0, AG1, AG2, AG3.

**Tableau 2:**

| **Aérogels** | **AG0** | **AG1** | **AG2** | **AG3** |
|---|---|---|---|---|
| Densité | 0,08 | 0,08 | 0,08 | 0,08 |
| Taux massique de reprise en eau à t₁ₕ | 4,5 % | 2,9 % | 2,4 % | 2,2 % |
| Taux massique de reprise en eau à t₂ₕ | 5,8 % | 4,2 % | 3,4 % | 2,9 % |
| Conductivité thermique à t₀ (mW.m⁻¹K⁻¹) | 23 | 24 | 23 | 23 |
| Conductivité thermique à t₁ₕ (mW.m⁻¹K⁻¹) | 28 | 23 | 24 | 25 |
| Conductivité thermique à t₂ₕ (mW.m⁻¹K⁻¹) | 29 | 26 | 26 | 26 |
| Concentration totale en COV à t₃ⱼ (µg.m⁻³) | 1106 | 29 | non mesuré | non mesuré |
| Concentration totale en COV à t₂₈ⱼ (µg.m⁻³) | 48 | 7 | non mesuré | non mesuré |
| Concentration en formaldéhyde à t₃ⱼ (µg.m⁻³) | 116 | <3 | non mesuré | non mesuré |
| Concentration en formaldéhyde à t₂₈ⱼ (µg.m⁻³) | 118 | < 3 | non mesuré | non mesuré |

Comme le montre ce tableau 2, les traitements thermiques sous gaz inerte de l'invention permettent essentiellement :
- de diminuer significativement la reprise en eau des aérogels AG1, AG2, AG3 en comparaison de l'aérogel AG0 obtenu sans ce traitement thermique (voir les taux de reprise en eau après 1 heure ou 2 heures presque réduits de moitié pour AG2 et AG3 par rapport à AG0), et
- d'obtenir une stabilité satisfaisante de la conductivité thermique des aérogels AG1, AG2, AG3 avec le temps en comparaison de l'aérogel AG0 dont la conductivité thermique a nettement augmenté sous atmosphère humide, voir l'augmentation de la conductivité de plus de 21 % après 1 heure et de plus de 26 % après 2 heures d'exposition pour AG0, alors que AG1, AG2 et AG3 sont le siège d'une augmentation de la conductivité de seulement 13 % après 2 heures d'exposition (soit réduite de moitié par rapport à AG0) avec notamment une augmentation de moins de 9 % pour AG1, et même d'une diminution de la conductivité de 4 % pour AG1 après 1 heure d'exposition (AG1 étant ainsi un aérogel préférentiel selon l'invention).

De plus, le tableau 2 montre que ces traitements thermiques selon l'invention permettent de diminuer très fortement les émissions de composés organiques volatiles et en particulier de formaldéhyde par les aérogels AG1, AG2, AG3 par rapport à AG0, ce qui rend ces aérogels selon l'invention beaucoup plus adaptés comme super isolants thermiques dans le bâtiment.

En effet, on a observé des rapports d'environ 38 et 7 entre l'aérogel préférentiel AG1 et AG0, pour l'émission totale de COV respectivement après 3 jours et 28 jours d'exposition, avec des concentrations de COV à ces deux instants réduites et tout à fait acceptables dans le bâtiment. De la même manière, on a observé des rapports d'environ 40 entre ce même aérogel AG1 et AG0, pour l'émission de formaldéhyde respectivement après 3 jours et 28 jours d'exposition, avec également de très faibles concentrations de formaldéhyde (inférieures à 3 µg.m⁻³) à ces deux instants.

La Demanderesse a par ailleurs vérifié que chaque aérogel AG1, AG2, AG3 selon l'invention présentait en surface et à cœur une structure polymérique sensiblement à base d'une unité de répétition à un noyau aromatique aux six atomes de carbone duquel sont successivement liés un atome d'hydrogène, un groupe alkyle de formule CH₂, un premier groupe hydroxyle OH, un premier groupe formaldéhyde CH₂-O, un second groupe OH et un second groupe CH₂-O, de sorte que les aérogels AG1, AG2, AG3 présentaient chacun globalement la formule chimique suivante (à l'exception de certains groupes hydroxyles et formaldéhydes carbonisés) :

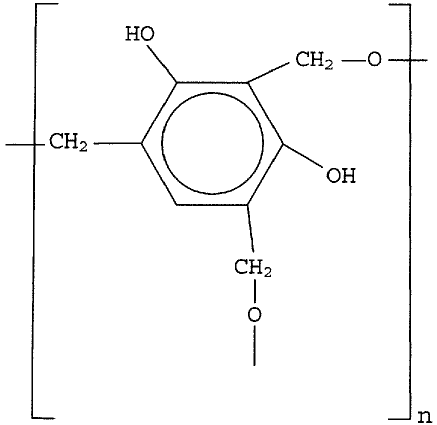

## Revendications

1. Procédé de préparation d'une composition gélifiée, séchée et non pyrolysée formant un aérogel monolithique organique de conductivité thermique inférieure ou égale à 40 mW.m⁻¹.K⁻¹, la composition étant issue au moins en partie d'une résine obtenue par polycondensation de polyhydroxybenzène(s) R et de formaldéhyde(s) F, le procédé comprenant :
a) une polymérisation dans un solvant aqueux W desdits polyhydroxybenzène(s) R et formaldéhyde(s) F en présence d'un catalyseur acide ou basique, pour l'obtention d'une solution à base de ladite résine,
b) une gélification de la solution obtenue en a) pour l'obtention d'un gel de ladite résine, et
c) un séchage du gel obtenu en b) pour l'obtention d'un gel séché,
**caractérisé en ce que** l'on met en œuvre l'étape a) en présence d'au moins un polyélectrolyte cationique hydrosoluble P dissous dans ledit solvant et présent dans ladite composition selon une fraction massique comprise entre 0,2 % et 2 %,
et **en ce que** le procédé comprend en outre une étape d) de traitement thermique sous gaz inerte dudit gel séché obtenu à l'étape c) à des températures comprises entre 150° C et 500° C pour l'obtention dudit aérogel non pyrolysé dont ladite conductivité thermique, mesurée avec un conductivimètre de Neotim par la technique du fil chaud selon la norme ASTM D5930-97, augmente de moins de 10 % et de moins de 20 % respectivement après une heure et deux heures d'exposition à une atmosphère humide régulée à 20° C et 65 % d'humidité relative.

2. Procédé selon la revendication 1, **caractérisé en ce que** l'on met en œuvre l'étape d) de manière à réaliser une carbonisation partielle des groupes oxygénés que ledit gel séché obtenu à l'étape c) présente en un cœur et en une couche superficielle, une partie seulement desdits groupes oxygénés étant carbonisée à l'étape d) de sorte que l'aérogel obtenu suite à l'étape d) présente des dits groupes oxygénés intacts dans ledit cœur et ladite couche superficielle.

3. Procédé selon la revendication 2, **caractérisé en ce que** l'on met en œuvre l'étape d) de manière que ledit aérogel obtenu suite à l'étape d) présente à titre de dits groupes oxygénés intacts des groupes hydroxyles et/ou des groupes formaldéhydes.

4. Procédé selon une des revendications précédentes, **caractérisé en ce que** l'étape d) comprend au moins une montée en température suivie d'au moins un palier de stabilisation thermique, et se termine par un refroidissement progressif jusqu'à une température comprise entre 15 et 30° C.

5. Procédé selon la revendication 4, **caractérisé en ce que** l'étape d) comprend successivement :
- une première dite montée en température à une vitesse comprise entre 1 et 5° C /minute jusqu'à une température intermédiaire comprise entre 100 et 200° C, suivie d'un premier dit palier de stabilisation à ladite température intermédiaire d'une durée comprise entre 5 et 30 minutes,
- une seconde dite montée en température à une vitesse comprise entre 2 et 10° C /minute jusqu'à une température finale comprise entre 240 et 460° C suivie d'un second dit palier de stabilisation à ladite température finale d'une durée comprise entre 1 heure et 3 heures, puis
- ledit refroidissement progressif pendant une durée d'au moins 45 minutes jusqu'à une température comprise entre 20 et 25° C.

6. Procédé selon une des revendications précédentes, **caractérisé en ce que** l'on utilise à l'étape a) pour ledit au moins un polyélectrolyte cationique P un polymère organique choisi dans le groupe constitué par les sels polymériques d'ammonium quaternaire, le poly(chlorure de vinylpyridinium), la poly(éthylène imine), la poly(vinyl pyridine), le poly(chlorhydrate d'allylamine), le poly(chlorure de triméthylammonium éthylméthacrylate), le poly(acrylamide-co-chlorure de diméthylammonium) et leurs mélanges, et de préférence un sel polymérique comportant des unités issues d'un ammonium quaternaire choisi parmi les poly(halogénure de diallyldiméthylammonium) .

7. Procédé selon une des revendications précédentes, **caractérisé en ce que** l'on met en œuvre l'étape a) à une température comprise entre 15 et 30° C, en dissolvant le(s)dit(s) polyhydroxybenzène(s) R et ledit au moins un polyélectrolyte cationique P dans ledit solvant aqueux W, de préférence constitué d'eau, puis en ajoutant à la dissolution obtenue le(s)dit(s) formaldéhyde(s) F et ledit catalyseur acide ou basique.

8. Procédé selon une des revendications précédentes, **caractérisé en ce que** l'on ajoute à ladite solution obtenue en a), avant l'étape b), au moins une charge apte à absorber des rayonnements infrarouges, telle qu'un noir de carbone.

9. Procédé selon une des revendications précédentes, **caractérisé en ce que** l'on met en œuvre l'étape c) par un séchage en étuve, sans échange de solvant ni séchage par fluide supercritique.

10. Composition gélifiée, séchée et non pyrolysée formant un aérogel monolithique organique de conductivité thermique inférieure ou égale à 40 mW.m⁻¹.K⁻¹, la composition étant susceptible d'être obtenue par un procédé selon une des revendications 1 à 9 et étant à base d'une résine issue au moins en partie de polyhydroxybenzène(s) R et de formaldéhyde(s) F, **caractérisée en ce que** la composition comprend au moins un polyélectrolyte cationique hydrosoluble P présent dans ladite composition selon une fraction massique comprise entre 0,2 % et 2 %, et a ladite conductivité thermique qui augmente de moins de 10 % et de moins de 20 % respectivement après une heure et deux heures d'exposition à une atmosphère humide régulée à 20° C et 65 % d'humidité relative, ladite conductivité thermique étant mesurée avec un conductivimètre de Neotim par la technique du fil chaud selon la norme ASTM D5930-97 et de préférence en outre selon la recommandation RILEM AAC 11-3.

11. Composition gélifiée, séchée et non pyrolysée selon la revendication 10, **caractérisée en ce que** ladite conductivité thermique est inférieure ou égale à 30 mW.m⁻¹.K⁻¹ et avantageusement inférieure ou égale à 26 mW.m⁻¹.K⁻¹, après lesdites deux heures d'exposition à ladite atmosphère humide.

12. Composition gélifiée, séchée et non pyrolysée selon la revendication 10 ou 11, **caractérisée en ce que** la composition présente un taux massique de reprise en eau inférieur à 3 % et à 5 %, respectivement après une heure et deux heures d'exposition à ladite atmosphère humide.

13. Composition gélifiée, séchée et non pyrolysée selon une des revendications 10 à 12, **caractérisée en ce que** ledit aérogel présente un cœur et une couche superficielle comprenant tous deux des groupes oxygénés non carbonisés, ledit aérogel présent une structure polymérique essentiellement à base d'une unité de répétition comprenant un noyau aromatique auquel sont liés au moins un groupe alkyle et plusieurs dits groupes oxygénés comprenant des groupes hydroxyles et/ou des groupes formaldéhydes.

14. Composition gélifiée, séchée et non pyrolysée selon une des revendications 10 à 13, **caractérisée en ce que** la composition comprend au moins une charge apte à absorber des rayonnements infrarouges, telle qu'un noir de carbone.

15. Composition gélifiée, séchée et non pyrolysée selon une des revendications 10 à 14, **caractérisée en ce que** ledit aérogel émet une concentration totale de composés organiques volatils (COV), mesurée en chambre d'essai d'émission selon la norme NF ISO 16006-6 de 2005 avec des éprouvettes préparées selon la norme NF EN ISO 16000-11 et conditionnées selon la norme NF EN ISO 16000-9, qui :
- après 3 jours d'exposition dans ladite chambre d'essai, est inférieure à 100 µg.m⁻³ et avantageusement inférieure à 40 µg.m⁻³, et/ou qui
- après 28 jours d'exposition dans ladite chambre d'essai, est inférieure à 40 µg.m⁻³ et avantageusement inférieure à 10 µg.m⁻³.

16. Composition gélifiée, séchée et non pyrolysée selon une des revendications 10 à 15, **caractérisée en ce que** ledit aérogel émet une concentration de formaldéhyde, mesurée en chambre d'essai d'émission selon la norme NF ISO 16006-3 de 2002 avec des éprouvettes préparées selon la norme NF EN ISO 16000-11 et conditionnées selon la norme NF EN ISO 16000-9, qui :
- après 3 jours d'exposition dans ladite chambre d'essai, est inférieure à 20 µg.m⁻³ et avantageusement inférieure à 5 µg.m⁻³, et/ou qui
- après 28 jours d'exposition dans ladite chambre d'essai, est inférieure à 20 µg.m⁻³ et avantageusement inférieure à 5 µg.m⁻³.

17. Composition gélifiée, séchée et non pyrolysée selon une des revendications 10 à 16, **caractérisée en ce que** la composition présente une surface spécifique comprise entre 400 m²/g et 1200 m²/g et une densité comprise entre 0,04 et 0,2.

18. Utilisation d'une composition gélifiée, séchée et non pyrolysée selon une des revendications 10 à 17 pour l'isolation thermique de bâtiments, d'appareillages pour industries mécaniques ou chimiques, et de véhicules terrestres, ferroviaires, maritimes, fluviaux, aériens ou spatiaux.

## Patentansprüche

1. Verfahren zur Herstellung einer gelierten, getrockneten und nicht pyrolysierten Zusammensetzung, die ein monolithisches organisches Aerogel mit einer Wärmeleitfähigkeit kleiner gleich 40 mW.m⁻¹.K⁻¹ bildet, wobei die Zusammensetzung wenigstens teilweise von einem Harz stammt, das durch Polykondensation von Polyhydroxybenzol(en) R und Formaldehyd(en) F erhalten wurde, wobei das Verfahren umfasst:
a) Eine Polymerisation des Polyhydroxybenzols (der Polyhydroxybenzole) R und des Formaldehyds (der Formaldehyde) F in einem wässrigen Lösungsmittel W in Gegenwart eines sauren oder basischen Katalysators, um eine Lösung auf der Basis des Harzes zu erhalten,
b) Gelieren der in a) erhaltenen Lösung, um ein Gel des Harzes zu erhalten, und
c) Trocknen des in b) erhaltenen Gels, um ein getrocknetes Gel zu erhalten, **dadurch gekennzeichnet, dass** die Stufe a) in Gegenwart wenigstens eines wasserlöslichen kationischen Polyelektrolyten P durchgeführt wird, der in dem Lösungsmittel gelöst ist und in der Zusammensetzung mit einem Massenanteil zwischen 0,2% und 2% vorliegt,
und dass das Verfahren ferner einen Schritt d) der Wärmebehandlung des in Schritt c) erhaltenen getrockneten Gels unter Inertgas bei Temperaturen zwischen 150°C und 500°C umfasst, um das nicht-pyrolysierte Aerogel zu erhalten, dessen mit einem Neotim-Leitfähigkeitsmessgerät unter Verwendung der Hitzdrahttechnik gemäß ASTM D5930-97 gemessene Wärmeleitfähigkeit nach ein- bzw. zweistündiger Exposition in einer feuchten Atmosphäre, die auf 20°C und 65 % relative Luftfeuchtigkeit eingestellt ist, um weniger als 10 % bzw. weniger als 20 % steigt.

2. Verfahren nach Anspruch 1, **dadurch gekennzeichnet, dass** Schritt d) derart durchgeführt wird, dass eine partielle Karbonisierung der sauerstoffhaltigen Gruppen, welche das in Schritt c) erhaltene getrocknete Gel in einem Kern und in einer Oberflächenschicht aufweist, durchgeführt wird, wobei nur ein Teil der sauerstoffhaltigen Gruppen in Schritt d) karbonisiert wird, so dass das nach Schritt d) erhaltene Aerogel die sauerstoffhaltigen Gruppen im Kern und in der Oberflächenschicht intakt aufweist.

3. Verfahren nach Anspruch 2, **dadurch gekennzeichnet, dass** Schritt d) derart durchgeführt wird, dass das nach Schritt d) erhaltene Aerogel als intakte sauerstoffhaltige Gruppen Hydroxylgruppen und/oder Formaldehydgruppen aufweist.

4. Verfahren nach einem der vorhergehenden Ansprüche, **dadurch gekennzeichnet, dass** Schritt d) wenigstens einen Temperaturanstieg, gefolgt von wenigstens einer thermischen Stabilisierungsstufe, umfasst und mit einer progressiven Abkühlung auf eine Temperatur zwischen 15 und 30°C endet.

5. Verfahren nach Anspruch 4, **dadurch gekennzeichnet, dass** Schritt d) nacheinander umfasst:
- einen ersten Temperaturanstieg mit einer Geschwindigkeit zwischen 1 und 5°C/Minute bis zu einer Zwischentemperatur zwischen 100 und 200°C, gefolgt von einer ersten Stabilisierungsstufe bei der Zwischentemperatur über einen Zeitraum zwischen 5 und 30 Minuten,
- einen zweiten Temperaturanstieg mit einer Geschwindigkeit zwischen 2 und 10°C/Minute bis zu einer Endtemperatur zwischen 240 und 460°C, gefolgt von einer zweiten Stabilisierungsstufe bei der Endtemperatur über einen Zeitraum zwischen 1 Stunde und 3 Stunden, dann
- allmähliche Abkühlung über einen Zeitraum von wenigstens 45 Minuten bis zu einer Temperatur zwischen 20 und 25°C.

6. Verfahren nach einem der vorhergehenden Ansprüche, **dadurch gekennzeichnet, dass** in Schritt a) für den wenigstens einen kationischen Polyelektrolyten P ein organisches Polymer verwendet wird, gewählt aus der Gruppe, umfassend polymere quaternäre Ammoniumsalze, Polyvinylpyridiniumchlorid und Polyethylenimin, Poly(vinylpyridin), Poly(allylaminhydrochlorid), Poly(trimethylammoniumethylmethacrylatchlorid), Poly(acrylamid-co-dimethylammoniumchlorid) und Mischungen davon, und vorzugsweise ein polymeres Salz, das Einheiten umfasst, die von einem quaternären Ammonium abgeleitet sind, das aus Poly(diallyldimethylammoniumhalogenid) gewählt wird.

7. Verfahren nach einem der vorhergehenden Ansprüche, **dadurch gekennzeichnet, dass** die Stufe a) bei einer Temperatur zwischen 15 und 30°C durchgeführt wird, indem das (die) Polyhydroxybenzol(e) R und der (die) wenigstens eine kationische Polyelektrolyt P in dem wässrigen Lösungsmittel W, welches vorzugsweise aus Wasser besteht, gelöst wird und dann das (die) Formaldehyd(e) F und der saure oder basische Katalysator zu der erhaltenen Lösung hinzu gegeben wird.

8. Verfahren nach einem der vorhergehenden Ansprüche, **dadurch gekennzeichnet, dass** zu der in a) erhaltenen Lösung vor dem Schritt b) wenigstens ein Füllstoff hinzu gegeben wird, der in der Lage ist, Infrarotstrahlung zu absorbieren, wie z.B. einen Ruß.

9. Verfahren nach einem der vorhergehenden Ansprüche, **dadurch gekennzeichnet, dass** Schritt c) durch Trocknen in einem Ofen ohne Lösungsmittelaustausch oder Trocknen durch überkritisches Fluid durchgeführt wird.

10. Gelierte, getrocknete und nicht pyrolysierte Zusammensetzung, die ein monolithisches organisches Aerogel mit einer Wärmeleitfähigkeit von weniger als oder gleich 40 mW.m⁻¹.K⁻¹ bildet, wobei die Zusammensetzung nach einem Verfahren nach einem der Ansprüche 1 bis 9 erhalten werden kann und auf einem Harz basiert, das wenigstens teilweise von Polyhydroxybenzol(en) R und Formaldehyd(en) F stammt, **dadurch gekennzeichnet, dass** die Zusammensetzung wenigstens einen wasserlöslichen kationischen Polyelektrolyten P umfasst, der in der Zusammensetzung mit einem Massenanteil zwischen 0,2 % und 2 % vorliegt, und die Wärmeleitfähigkeit aufweist, welche nach ein- bzw. zweistündiger Exposition in einer feuchten Atmosphäre, die auf 20°C und 65 % relative Luftfeuchtigkeit eingestellt ist, um weniger als 10 % bzw. weniger als 20 % steigt, wobei die Wärmeleitfähigkeit mit einem Neotim-Leitfähigkeitsmessgerät unter Verwendung der Hitzdrahttechnik gemäß ASTM D5930-97 und vorzugsweise weiter gemäß der Empfehlung RILEM AAC 11-3 gemessen wird.

11. Gelierte, getrocknete und nicht pyrolysierte Zusammensetzung nach Anspruch 10, **dadurch gekennzeichnet, dass** die Wärmeleitfähigkeit nach der zweistündigen Exposition in der feuchten Atmosphäre kleiner oder gleich 30 mW.m⁻¹.K⁻¹ und vorteilhafterweise kleiner oder gleich 26 mW.m⁻¹.K⁻¹ ist.

12. Gelierte, getrocknete und nicht pyrolysierte Zusammensetzung nach Anspruch 10 oder 11, **dadurch gekennzeichnet, dass** die Zusammensetzung nach einer einstündigen bzw. zweistündigen Exposition in der feuchten Atmosphäre einen Massenanteil der Wasseraufnahme von weniger als 3 % bzw. weniger als 5 % aufweist.

13. Gelierte, getrocknete und nicht-pyrolysierte Zusammensetzung nach einem der Ansprüche 10 bis 12, **dadurch gekennzeichnet, dass** das Aerogel einen Kern und eine Oberflächenschicht aufweist, die beide nicht-karbonisierte sauerstoffhaltige Gruppen umfassen, wobei das Aerogel eine Polymerstruktur aufweist, die im Wesentlichen auf einer sich wiederholenden Einheit basiert, die einen aromatischen Kern umfasst, an den wenigstens eine Alkylgruppe gebunden ist, und wobei mehrere der sauerstoffhaltigen Gruppen Hydroxylgruppen und/oder Formaldehydgruppen umfassen.

14. Gelierte, getrocknete und nicht pyrolysierte Zusammensetzung nach einem der Ansprüche 10 bis 13, **dadurch gekennzeichnet, dass** die Zusammensetzung wenigstens einen Füllstoff umfasst, der in der Lage ist, Infrarotstrahlung zu absorbieren, wie z.B. einen Ruß.

15. Gelierte, getrocknete und nicht pyrolysierte Zusammensetzung nach einem der Ansprüche 10 bis 14, **dadurch gekennzeichnet, dass** das Aerogel eine Gesamtkonzentration an flüchtigen organischen Verbindungen (VOC) abgibt, gemessen in einer Emissionsprüfkammer gemäß der Norm NF ISO 16006-6 von 2005 mit Proben, die gemäß der Norm NF EN ISO 16000-11 vorbereitet und gemäß der Norm NF EN ISO 16000-9 konditioniert wurden, die:
- nach 3-tägiger Exposition in der Prüfkammer weniger als 100 µg.m⁻³ und vorteilhafterweise weniger als 40 µg.m⁻³ beträgt, und/oder die
- nach 28-tägiger Exposition in der Prüfkammer weniger als 40 µg.m⁻³ und vorteilhafterweise weniger als 10 µg.m⁻³ beträgt.

16. Gelierte, getrocknete und nicht pyrolysierte Zusammensetzung nach einem der Ansprüche 10 bis 15, **dadurch gekennzeichnet, dass** das Aerogel eine Formaldehydkonzentration abgibt, die in einer Emissionsprüfkammer nach der Norm NF ISO 16006-3 von 2002 mit Proben, die gemäß der Norm NF EN ISO 16000-11 hergestellt und gemäß der Norm NF EN 15 ISO 16000-9 konditioniert wurden, gemessen wird, die:
- nach 3-tägiger Exposition in der Prüfkammer weniger als 20 µg.m⁻³ beträgt und vorteilhafterweise weniger als 5 µg.m⁻³ beträgt, und/oder die
- nach 28-tägiger Exposition in der Prüfkammer weniger als 20 µg.m⁻³ und vorteilhafterweise weniger als 5 µg.m⁻³ beträgt.

17. Gelierte, getrocknete und nicht pyrolysierte Zusammensetzung nach einem der Ansprüche 10 bis 16, **dadurch gekennzeichnet, dass** die Zusammensetzung eine spezifische Oberfläche zwischen 400 m²/g und 1200 m²/g und eine Dichte zwischen 0,04 und 0,2 aufweist.

18. Verwendung einer gelierten, getrockneten und nicht pyrolysierten Zusammensetzung nach einem der Ansprüche 10 bis 17 für die Wärmedämmung von Gebäuden, von Ausrüstungen für die mechanische oder chemische Industrie und von Land-, Schienen-, See-, Fluss-, Luft- oder Raumfahrzeugen.

## Claims

1. A method for preparing a gelled, dried and non-pyrolyzed composition forming an organic monolithic aerogel having a thermal conductivity less than or equal to 40mW.m⁻¹.K⁻¹, the composition at least partly deriving from a resin obtained by the polycondensation of polyhydroxybenzene(s) R and formaldehyde(s) F, the method comprising:
a) a polymerisation in an aqueous solvent W of said polyhydroxybenzene(s) R and formaldehyde(s) F in the presence of an acid or base catalyst, to obtain a solution based on said resin,
b) gelling the solution obtained in a) to obtain a gel of said resin, and
c) drying the gel obtained in b) to obtain a dried gel,
**characterised in that** step a) is implemented in the presence of at least one water-soluble cationic polyelectrolyte P dissolved in said solvent and present in said composition according to a mass fraction between 0.2% and 2%,
and **in that** the method further comprises a step d) of heat treatment under inert gas of said dried gel obtained in step c) at temperatures between 150°C and 500°C to obtain said non-pyrolyzed aerogel, said thermal conductivity of which, measured with a Neotim conductivity meter by the hot wire technique according to the standard ASTM D5930-97, increases by less than 10% and by less than 20%, respectively, after one hour and two hours of exposure to a humid atmosphere regulated to 20°C and 65% relative humidity.

2. The method according to claim 1, **characterised in that** step d) is implemented in such a way as to carry out a partial carbonisation of the oxygenated groups that said dried gel obtained in step c) has in a core and in a surface layer, only a part of said oxygenated groups being carbonised in step d) so that the aerogel obtained after step d) has some osaid oxygenated groups intact in said core and said surface layer.

3. The method according to claim 2, **characterised in that** step d) is implemented in such a way that said aerogel obtained after step d) has hydroxyl groups and/or formaldehyde groups as said intact oxygenated groups.

4. The method according to one of the previous claims, **characterised in that** step d) comprises at least one rise in temperature followed by at least one thermal stabilisation plateau, and ends with a progressive cooling to a temperature between 15 and 30°C.

5. The method according to claim 4, **characterised in that** step d) successively comprises:
- a first said rise in temperature at a speed between 1 and 5°C/minute up to an intermediate temperature between 100 and 200°C, followed by a first said stabilisation plateau at said intermediate temperature having a duration between 5 and 30 minutes,
- a second said rise in temperature at a speed between 2 and 10°C/minute up to a final temperature between 240 and 460°C followed by a second said stabilisation plateau at said final temperature having a duration between 1 hour and 3 hours, then
- said progressive cooling for a time of at least 45 minutes to a temperature between 20 and 25°C.

6. The method according to one of the previous claims, **characterised in that** in step a) an organic polymer chosen from the group consisting of the polymer salts of quaternary ammonium, poly(vinylpyridinium chloride), poly(ethylene imine), poly(vinyl pyridine), poly(allylamine hydrochloride), poly(trimethylammonium ethylmethacrylate chloride), poly(dimethylammonium acrylamide-co-chloride) and the mixtures thereof, and preferably a polymer salt including units coming from a quaternary ammonium chosen from the poly(diallyldimethylammonium halides), is used for said at least one cationic polyelectrolyte P.

7. The method according to one of the previous claims, **characterised in that** step a) is implemented at a temperature between 15 and 30°C, by dissolving said polyhydroxybenzene(s) R and said at least one cationic polyelectrolyte P in said aqueous solvent W, preferably consisting of water, then by adding to the dissolution obtained said formaldehyde(s) F and said acid or base catalyst.

8. The method according to one of the previous claims, **characterised in that** before step b), at least one filler capable of absorbing infrared radiation, such as a carbon black, is added to said solution obtained in a).

9. The method according to one of the previous claims, **characterised in that** step c) is implemented by drying in an oven, without exchanging solvent or drying by supercritical fluid.

10. A gelled, dried and non-pyrolyzed composition forming an organic monolithic aerogel having a thermal conductivity less than or equal to 40mW.m⁻¹.K⁻¹, the composition being able to be obtained by a method according to one of claims 1 to 9 and being based on a resin at least partly deriving from polyhydroxybenzene(s) R and formaldehyde(s) F, **characterised in that** the composition comprises at least one water-soluble cationic polyelectrolyte P present in said composition according to a mass fraction between 0.2% and 2%, and has said thermal conductivity that increases by less than 10% and by less than 20%, respectively, after one hour and two hours of exposure to a humid atmosphere regulated to 20°C and 65% relative humidity, said thermal conductivity being measured with a Neotim conductivity meter by the hot wire technique according to the standard ASTM D5930-97 and preferably further according to the recommendation RILEM AAC 11-3.

11. The gelled, dried and non-pyrolyzed composition according to claim 10, **characterised in that** said thermal conductivity is less than or equal to 30mW.m⁻¹.K⁻¹ and advantageously less than or equal to 26mW.m⁻¹.K⁻¹, after said two hours of exposure to said humid atmosphere.

12. The gelled, dried and non-pyrolyzed composition according to claim 10 or 11, **characterised in that** the composition has a water uptake rate by weight of less than 3% and 5%, respectively, after one hour and two hours of exposure to said humid atmosphere.

13. The gelled, dried and non-pyrolyzed composition according to one of claims 10 to 12, **characterised in that** said aerogel has a core and a surface layer both comprising non-carbonised oxygenated groups, said aerogel has a polymer structure substantially containing a repeating unit comprising an aromatic core to which at least one alkyl group and several said oxygenated groups comprising hydroxyl groups and/or formaldehyde groups are bonded.

14. The gelled, dried and non-pyrolyzed composition according to one of claims 10 to 13, **characterised in that** the composition comprises at least one filler capable of absorbing infrared radiation, such as a carbon black.

15. The gelled, dried and non-pyrolyzed composition according to one of claims 10 to 14, **characterised in that** said aerogel emits a total concentration of volatile organic compounds (VOC), measured in an emission test chamber according to the standard NF ISO 16006-6 from 2005 with test specimens prepared according to the standard NF EN ISO 16000-11 and conditioned according to the standard NF EN ISO 16000-9, which:
- after 3 days of exposure in said test chamber is less than 100µg.m⁻³ and advantageously less than 40µg.m⁻³, and/or which
- after 28 days of exposure in said test chamber is less than 40µg.m⁻³ and advantageously less than 10µg.m⁻³.

16. The gelled, dried and non-pyrolyzed composition according to one of claims 10 to 15, **characterised in that** said aerogel emits a concentration of formaldehyde, measured in an emission test chamber according to the standard NF ISO 16006-3 from 2002 with test specimens prepared according to the standard NF EN ISO 16000-11 and conditioned according to the standard NF EN ISO 16000-9, which:
- after 3 days of exposure in said test chamber is less than 20µg.m⁻³ and advantageously less than 5µg.m⁻³, and/or which
- after 28 days of exposure in said test chamber is less than 20µg.m⁻³ and advantageously less than 5µg.m⁻³.

17. The gelled, dried and non-pyrolyzed composition according to one of claims 10 to 16, **characterised in that** the composition has a specific surface area between 400m²/g and 1200m²/g and a density between 0.04 and 0.2.

18. A use of a gelled, dried and non-pyrolyzed composition according to one of claims 10 to 17 for the thermal insulation of buildings, of equipment for mechanical or chemical industries, and of terrestrial, railway, marine, fluvial, aerial or spatial vehicles.
